# EUROPÄISCHE PATENTSCHRIFT

(11) **EP 3 913 157 B1**
(45) Veröffentlichungstag und Bekanntmachung des Hinweises auf die Patenterteilung: **27.11.2024**
(21) Anmeldenummer: 21173060.1
(22) Anmeldetag: 10.05.2021
(51) Int. Cl.: E03F 1/00, E03F 5/10, E03F 5/14

(54) **REINIGUNGS- UND VERSICKERUNGSANLAGE**
CLEANING AND INFILTRATION SYSTEM
INSTALLATION DE NETTOYAGE ET DE PERCOLATION

(30) Priorität: 20.05.2020 DE 102020113718
(43) Veröffentlichungstag der Anmeldung: 24.11.2021
(73) Patentinhaber: Enregis GmbH, 59846 Sundern (DE)
(72) Erfinder: Amft, Andreas Paul, 59755 Arnsberg (DE)
(74) Vertreter: Michalski Hüttermann & Partner Patentanwälte mbB

(56) Entgegenhaltungen:
- KR-B1- 100 966 038
- KR-B1- 101 222 885
- KR-B1- 101 288 606

## Beschreibung

Die Erfindung betrifft eine Reinigungs- und Versickerungsanlage für Niederschlagswasser gemäss dem Oberbegriff von Anspruch 1, umfassend eine Speicher-/Versickerungsstufe und eine der Speicher-/Versickerungsstufe vorgeschaltete Stufe, wobei die Speicher-/Versickerungsstufe dazu ausgestaltet ist, das Niederschlagswasserzur Zwischenspeicherung in sich aufzunehmen und zur Versickerung abzugeben und die der Speicher-/Versickerungsstufe vorgeschaltete Stufe derart mit der Speicher-/Versickerungsstufe gekoppelt ist, dass ein Abfluss des Niederschlagswassersvon der der Speicher-/Versickerungsstufe vorgeschalteten Stufe in die Speicher-/Versickerungsstufe nur bei überstauter der Speicher-/Versickerungsstufe vorgeschalteten Stufe möglich ist.

Zur Zwischenspeicherung und Versickerung von Fluiden, vor Allem von Niederschlagswasser, werden in der Praxis häufig Rigolen eingesetzt, die Verteilrohre enthalten und entweder mit Kies oder mit Versickerungsvorrichtungen (Hohlkörpern) gefüllt sind. Moderne Speicher-/Versickerungssysteme enthalten oft modular aufgebaute Hohlkörper, die zusammen den statischen Rückhalt des Behälters bilden und je nach Anwendung mit einer offenporigen Membran beispielsweise einem Vliesstoff (Versickerungsanlage) oder Folien (Speichersystem) ummantelt sind.

Solche Speicher-/Versickerungssysteme sind empfindlich gegenüber Verschmutzung durch Feststoffablagerungen sowie dem Eintrag von Öl oder sonstigen Leichtflüssigkeiten. Die Versickerungssysteme sind mit einer Ummantelung aus wasserdurchlässigem Material ausgestattet, durch welches das zwischengespeicherte Niederschlagswasser in einer definierten Menge und Geschwindigkeit in das Erdreich versickern kann. Wird beispielsweise durch ein Regenereignis eine entsprechende Schmutzfracht in das System gebracht, lagern sich Feststoffe als Sediment ab. Bereits nach kurzer Zeit wird infolge dessen die wasserdurchlässige Ummantelung so stark kolmatieren, dass ein Wasserabfluss nicht mehr bzw. nur noch eingeschränkt stattfinden kann.

Um einer derartigen Kolmation vorzubeugen, wird heutzutage dem Speicher-/Versickerungssystem häufig eine Reinigungsstufe vorgeschaltet, die das Niederschlagswasser von Fremdkörpern und/oder Fremdstoffen reinigt bevor es dem Speicher-/Versickerungssystem zugeführt wird. Der Zulauf von der Reinigungsstufe zu dem Speicher-/Versickerungssystem erfolgt dabei in der Regel über ein hydrostatisches Gefälle. Folglich ist der Abfluss des Niederschlagswasser von der Reinigungsstufe in die Speicher-/Versickerungsstufe nur bei überstauter Reinigungsstufe möglich.

Dieser Aufbau hat jedoch zur Folge, dass bei beendetem Regenereignis ein Rest des Niederschlagswassers in der Reinigungsstufe zurückbleibt, da der Rest des Niederschlagswassers ohne nachkommendes Niederschlagswasser das hydrostatische Gefälle nicht überwinden und folglich nicht in die Speicher-/Versickerungsstufe ablaufen kann. In der Reinigungsstufe verweilendes restliches Niederschlagswasser, das nicht abfließen kann, kann aber zu unerwünschten anaeroben organischen Faulprozessen und Stoffrücklösungen sowie zu einem gehemmten biologischen Abbau der Fremdstoffe durch Mikroorganismen führen. Darüber hinaus blockiert dieses Wasservolumen ein mögliches Rückhaltevolumen.

Die aus dem Stand der Technik bekannten Reinigungs- und Versickerungsanlagen erlauben es bisher nicht, Faulprozesse in dem Reinigungssystem durch in dem Reinigungssystem verweilendes Niederschlagswasser zu vermeiden bzw. den Speicherraum freizugeben.

Die KR 101 288 606 B1 beschreibt eine Versickerungsmulde, um punktuelle Verunreinigungen im abfließenden Wasser durch die Installation eines Filtertanks, eines Vorbehandlungsbeckens und eines Sammelbrunnens zu reduzieren. Diese Versickerungsmulde umfasst einen Vorbehandlungsbehälter, einen Sammelbrunnen, einen Filterbehälter und Filternetze. Der Vorbehandlungsbehälter umfasst eine obere Wand und eine untere Wand. An die obere Wand sind ein Zuflussrohr und ein Boden mit Durchgangslöchern angeschlossen. Die untere Wand besteht aus einer Wasserdurchlassöffnung und einem Überlaufteil. Die Auffangwanne besteht aus dem Boden mit den Durchgangslöchern, dem Wasserüberlaufloch und dem Überlaufteil. Die Auffangwanne besteht aus der unteren Wand, die mit einem Abflussrohr mit der oberen Wand verbunden ist. Der Filterbehälter ist zwischen dem Vorbehandlungsbehälter und der Auffangwanne installiert. Der Filtertank besteht aus dem Boden mit den Durchgangslöchern.

Außerdem ist aus der KR 100 966 038 B1 ein Regenwasser-Infiltrationssystem bekannt, dass, eine Niederschlagsstufe, eine Filtrationsstufe und eine Speicherstufe aufweist. Die Filtrationsstufe weist einen Filtrationstank und eine Phosphorentfernungsschicht auf. Mehrere Löcher zur Filtration von Regenwasser sind in der Bodenfläche des Filtrationstanks ausgebildet. Die Schicht zur Phosphorentfernung wird im Inneren des Filtrationsbehälters gebildet. Die Schicht zur Phosphorentfernung wird durch das Einbringen von Filtermaterialien gebildet.

Schließlich ist aus der KR 101 222 885 B1 ein System zum Sammeln von Regenwasser bekannt, dass einen Körper, eine Filterschicht, eine Auslassöffnung für Regenwasser und eine Vorrichtung zum Entfernen von Regenwasser aufweist. Das Gehäuse umfasst einen Regenwassereinlass, einen Regenwasserauslass, einen Sandfang, einen Tank zur Abscheidung von Schwebstoffen und einen Filtertank. Die Filterschicht umfasst zwei Schwammfilter und einen Aktivkohlefilter. Die anfängliche Regenwasserabflussöffnung ist an der Bodenfläche des Sandkastens ausgebildet und umfasst eine Öffnungs- und Verschlussplatte, einen Schwimmer und einen Pfosten. Die Öffnungs- und Verschlussplatte deckt den Einlass der ersten Regenwasserabflussöffnung ab. Der Pfosten öffnet die Öffnungs- und Verschlussplatte durch die Last des Schwimmers und ermöglicht es der Öffnungs- und Verschlussplatte, die anfängliche Regenwasserabflussöffnung zu schließen, wenn der Schwimmer auf dem Wasser schwimmt.

Davon ausgehend ist es die Aufgabe der Erfindung, eine derartige Reinigungs- und Versickerungsanlage bereitzustellen, bei der die zuvor genannten Probleme verringert sind oder vermieden werden.

Diese Aufgabe wird durch den Gegenstand des Patentanspruchs 1 gelöst. Bevorzugte Weiterbildungen finden sich in den Unteransprüchen.

Das Ablaufelement ist erfindungsgemäß derart ausgebildet und angeordnet, dass auch dann noch Niederschlagswasser aus der der Speicher-/Versickerungsstufe vorgeschalteten Stufe abfließen kann, wenn diese nicht mehr so hoch überstaut ist, dass es zu einem Abfluss des Niederschlagswassers in die Speicher-/Versickerungsstufe kommt. Somit ist eine Reduzierung des Füllstands des Niederschlagswassers bzw. ein vollständiges Trockenfallen auch dann möglich, wenn die Speicher-/Versickerungsstufe höher angeordnet ist, beispielsweis um Niederschlagswasser in einen Kanal einzuleiten. Dabei soll das Ablaufelement grundsätzlich zumindest eine Reduzierung des Füllstands des Niederschlagswassersin der der Speicher-/Versickerungsstufe vorgeschalteten Stufe ermöglichen.

Maßgeblich für die Erfindung ist dabei, dass bei Normalbetrieb der Reinigungs- und Versickerungsanlagen, also bei überstauter Reinigungsstufe, der Hauptanteil des Niederschlagswassers über die Speicher-/Versickerungsstufe in das Erdreich versickert, während gleichzeitig nur ein geringerer Teil als Leckage durch das Ablaufelements versickert. Der Hauptanteil des Niederschlagswassers, der bei überstauter Reinigungsstufe über die Speicher-/Versickerungsstufe in das Erdreich versickert, beträgt erfindungsgemäß wenigstens 95 %, besonders bevorzugt 99 %, ganz besonders bevorzugt 99,9 %.

Gemäß einer bevorzugten Weiterbildung der Erfindung ist das Ablaufelement derart ausgebildet und angeordnet, dass es ein Trockenfallen der der Speicher-/Versickerungsstufe vorgeschalteten Stufe ermöglicht. Aufgrund des Ablaufelements kann bei dieser Ausgestaltung das Niederschlagswasser praktisch vollständig ablaufen und die der Speicher-/Versickerungsstufe vorgeschaltete Stufe somit trockenfallen. Ist vorliegend die Rede von einem Trockenfallen der der Speicher-/Versickerungsstufe vorgeschaltete Stufe, bedeutet das, dass diese Stufe nicht permanent mit Niederschlagswasser gefüllt ist, sondern das Niederschlagswasser im Wesentlichen vollständig über das Ablaufelement an ein das Speicher-/Versickerungssystem bzw. Ablaufelement umgebendes Erdreich bzw. in einen Kanal oder eine Vorflut abgegeben werden kann, wenn die Überstauung dieser Stufe nicht mehr ausreichend ist, um einen Abfluss in die Speicher-/Versickerungsstufe zu ermöglichen. Wenn es dabei heißt, dass die der Speicher-/Versickerungsstufe vorgeschaltete Stufe "im Wesentlichen" trockenfallen kann, so soll damit zum Ausdruck gebracht werden, dass aufgrund verschiedener Gründe natürlich immer eine geringe Menge des Niederschlagswassers zurückbleiben kann, z.B. aufgrund von Rauheiten oder Eintrag von Störkörpern in die Stufe. Die Menge des zurückbleibenden Niederschlagswassers ist dabei jedoch so gering, dass die gewünschten und nachfolgend beschriebenen Effekte des Trockenfallens im Ergebnis nicht beeinträchtigt werden.

Durch das Trockenfallen der der Speicher-/Versickerungsstufe vorgeschalteten Stufe, die beispielsweise als Reinigungsstufe ausgestaltet ist, stellen sich in dieser Stufe aerobe Bedingungen ein, es kommt also zu einer Zufuhr von Sauerstoff an die Fremdstoffe, die von der Reinigungsstufe durch den Reinigungsprozess zurückgehalten werden. Durch die aeroben Bedingungen sind der biologische Abbau und die biologische Umwandlung der Fremdstoffe in der Reinigungsstufe verbessert. Das Trockenfallen der Reinigungsstufe ist insbesondere für den biologischen Abbau der Leichtflüssigkeiten, wie Öle, Fette, und allen anderen hydrophoben organischen Materialien, von Vorteil. Während diese auf dem Fluid aufschwimmen und so für die Mikroorganismen, welche für den Abbau verantwortlich sind, nur schwer erreichbar sind, legen sich die hydrophoben Materialien beim Trockenfallen als Film über die zurückgehaltenen Feststoffe. Hierdurch wird die Kontaktfläche zwischen den für den Abbau zuständigen Mikroorganismen und den Leichtflüssigkeiten vergrößert, was den Abbau begünstigt.

Darüber hinaus sorgt das Trockenfallen für ein "Abtrocknen" der Hohlräume der Reinigungsstufe, wodurch Schäden an den Innenwänden verhindert werden können, so dass insbesondere abgeschiedene Sedimente und Leichtflüssigkeiten weiter stabilisiert und organisch aerob zersetzt bzw. abgebacht werden können. Dabei ist vorgesehen, dass der Reinigungseffekt unabhängig vom Fluidspiegel, auch beim Trockenfallen der Reinigungsstufe, bestehen bleibt.

Gemäß einer bevorzugten Weiterbildung der Erfindung sind die Speicher-/Versickerungsstufe und das Ablaufelement dazu ausgestaltet, das Niederschlagswasser zur Versickerung in ein das Speicher-/Versickerungssystem bzw. Ablaufelement umgebendes Erdreich, in ein Kanalnetz oder in eine Vorflut abzugeben. Das Abgeben des Niederschlagswassers an das Erdreich erfolgt beispielsweise über ein fluiddurchlässiges Material, durch welches das zwischengespeicherte Niederschlagswasserin einer definierten Menge und Geschwindigkeit in das Erdreich versickern kann. Das fluiddurchlässige Material kann ein Vlies oder eine fluiddurchlässige offenporige Membran sein. Darüber hinaus kann das Abgeben des Niederschlagswassers an die Umgebung zusätzlich oder alternativ über Bohrungen in den Außenwänden der Behälter der Speicher-/Versickerungsstufe und/oder des Ablaufelements erfolgen. Der Durchmesser der Bohrungen bestimmt dabei die definierte Menge und Geschwindigkeit, mit der das Niederschlagswasser an das Erdreich abgegeben werden kann. Das Ablaufelement kann zum Trockenfallen über Mikroversickerung zum Erdreich hin oder über Mikrodrossel zum Kanal oder in die Vorflut eingerichtet sein.

Grundsätzlich ist es möglich, dass die der Speicher-/Versickerungsstufe vorgeschaltete Stufe eine Vielzahl an Funktionen übernehmen kann. Gemäß einer bevorzugten Weiterbildung der Erfindung ist es jedoch vorgehsehen, dass die der Speicher-/Versickerungsstufe vorgeschaltete Stufe eine Reinigungsstufe ist oder dass die der Speicher-/Versickerungsstufe vorgeschaltete Stufe eine Behandlungsstufe ist, der ihrerseits eine Reinigungsstufe vorgeschaltet ist. Demnach wird das Niederschlagswasser entweder zuerst einer Reinigungsstufe zugeführt, bevor es in die Speicher-/Versickerungsstufe abläuft, oder es wird einer Reinigungsstufe zugeführt, von wo es einer Behandlungsstufe zugeführt wird, bevor es in die Speicher-/Versickerungsstufe abläuft. Je nach Bedarf kann die Behandlungsstufe also zwischen der Reinigungs- und der Speicher-/Versickerungsstufe zwischengeschaltet werden.

Handelt es sich bei der der Speicher-/Versickerungsstufe vorgeschalteten Stufe um eine Reinigungsstufe, reinigt die Reinigungsstufe das Niederschlagswasser von Fremdstoffen bevor es von der Speicher-/Versickerungsstufe aufgenommen wird. Hierdurch wird das Speicher-/Versickerungssystem vor Kolmation bzw. Verblockung geschützt und das Speicher-/Versickerungssystem bleibt langfristig leistungsfähig.

Eine zusätzlich mögliche Behandlungsstufe behandelt das Niederschlagswasser nach dem Reinigungsvorgang der Reinigungsstufe, bevor es in die Speicher-/Versickerungsstufe abläuft. Zur Behandlung des Niederschlagswassers können technische Filter verwendet werden. Es kommen beispielsweise X-Filter mit Sand, Kies und/oder Aktivkohle, Anschwemmfilter, Kerzenfilter, Raumfilter, Schichtbettfilter, einfache mechanische Filter, wie Rechen, Membranen und Siebeinrichtungen, und/oder Magnetfilter zum Einsatz.

Gemäß einer bevorzugten Weiterbildung der Erfindung weist die Reinigungsstufe einen Zulauf auf, über den das Niederschlagswasser der Reinigungsstufe zuführbar ist, wobei der Zulauf ein hydrostatisches Gefälle aufweist. Folglich ist es möglich, der Reinigungsstufe das Niederschlagswasser über den Zulauf ohne eine Krafteinwirkung, beispielsweise ohne eine Krafteinwirkung durch Pumpen, zuzuführen.

Der Zulauf kann beispielsweise einen Kanal, einen Einlaufschacht oder eine Kanalanlage umfassen. Es kann vorgesehen sein, dass das Speicher-/Versickerungssystem an das Kanalnetz einer Kommune bzw. eines Einzugsgebiets angeschlossen ist.

Eine wesentlich bevorzugte Weiterbildung der Erfindung liegt darin, dass das Niederschlagswasser über einen Zulauf der Speicher-/Versickerungsstufe zuführbar ist, wobei der Zulauf derart positioniert ist, dass das Niederschlagswasser den Zulauf lediglich bei einem vorbestimmtem Füllstand der der Speicher-/Versickerungsstufe vorgeschalteten Stufe erreichen kann. Dadurch wird gewährleistet, dass auch die der Speicher-/Versickerungsstufe vorgeschaltete Stufe eine Speicherfunktion aufweist. Die der Speicher-/Versickerungsstufe vorgeschaltete Stufe muss "volllaufen", also überstauen, bis das Niederschlagswasser den Zulauf zur Speicher-/Versickerungsstufe erreichen kann.

Eine bevorzugte Weiterbildung der Erfindung liegt darin, dass die Reinigungsstufe und/oder die Behandlungsstufe dazu ausgestaltet sind, das Niederschlagswasser zur Zwischenspeicherung in sich aufzunehmen. Dadurch, dass der Zulauf zu der Reinigungsstufe und/oder Behandlungsstufe sowie der Zulauf in die Speicher-/Versickerungsstufe ein hydrostatisches Gefälle aufweisen, müssen die einzelnen Stufen jeweils überstaut sein, damit das Niederschlagswasser in die nächste Stufe abfließen kann. Folglich können auch die Reinigungsstufe und/oder Behandlungsstufe zur Zwischenspeicherung des Niederschlagswassers dienen.

Gemäß einer bevorzugten Weiterbildung der Erfindung ist das Ablaufelement derart positioniert, dass der Zulauf zum Ablaufelement ein hydrostatisches Gefälle aufweist. Dadurch kann gewährleistet werden, dass das Niederschlagswasser ohne Krafteinwirkung, beispielweise durch Pumpen, dem Ablaufelement zugeführt werden kann.

Grundsätzlich kann das Ablaufelement auf viele Weisen wasserdurchlässig ausgestaltet sein. Gemäß einer bevorzugten Weiterbildung ist es jedoch vorgesehen, dass das Ablaufelement Bohrungen aufweist und/oder mit einem wasserdurchlässigen Textil ummantelt ist. Als wasserdurchlässiges Textil kann beispielsweise ein Geotextil dienen. Das Geotextil kann entweder aus natürlichen Fasern, wie beispielsweise Schilf, Jute und/oder Kokos, oder aus künstlichen Fasern, wie beispielsweise Polypropylen, Polyamid, Polyester und/oder Polyethylen, bestehen. Der Durchmesser der Bohrungen in dem Gehäuse des Ablaufelements definieren die Geschwindigkeit mit der das Niederschlagswasser in das Erdreich versickern kann.

In einer bevorzugten Weiterbildung der Erfindung ist vorgesehen, dass das Ablaufelement direkt oder über eine von der Speicher-/Versickerungsstufe vorgeschalteten Stufe wegleitende Rohrleitung an die der Speicher-/Versickerungsstufe vorgeschaltete Stufe angeschlossen ist. Das Ablaufelement kann bei der Installation der Reinigungs- und Versickerungsanlage flexibel positioniert werden, sodass gezielt auf örtliche Bedingungen eingegangen werden kann.

Gemäß einer bevorzugten Weiterbildung der Erfindung ist es vorgesehen, dass das Ablaufelement derart ansteuerbar ist, dass seine Trockenfallfunktion ein- bzw. ausschaltbar oder regulierbar ist. Dies wird ermöglicht, indem das Ablaufelement vorzugsweise mechanisch oder elektromechanisch ansteuerbar ist. Durch ein Schließen und Öffnen beispielsweise einer Klappe kann der Zufluss zum Ablaufelement reguliert werden.

Wie bereits erwähnt, dient die Reinigungsstufe zur Reinigung des Niederschlagswassers . Gemäß einer bevorzugten Weiterbildung der Erfindung ist die Reinigungsstufe dazu ausgestaltet, das Niederschlagswasser von Feststoffen, Leichtflüssigkeiten und/oder gelösten Stoffen zu reinigen.

Insbesondere der Straßenverkehr sorgt mit seinem Eintrag aus z.B. dem Abrieb von Reifen oder Bremsanlagen sowie Leichtflüssigkeiten, wie Mineralölkohlenwasserstoffen (MKW) und polycyclischen aromatischen Kohlenwasserstoffen (PAK), für einen Großteil der im Niederschlagswasser enthaltenen Fremdstoffe. Darüber hinaus werden eine Vielzahl unterschiedlicher Stoffe aus Industrie und Landwirtschaft mit dem Niederschlagswasser in das Speicher-/Versickerungssystem eingetragen. Die Reinigungsstufe ist dazu ausgestaltet, das Niederschlagswasser von diesen Fremdstoffen zu reinigen. Dabei werden die Fremdstoffe entfernt, bevor das Niederschlagswasser von der Speicher-/Versickerungsstufe oder einer Zwischenstufe aufgenommen wird.

Zwecks Reinigung des Niederschlagswassers von Fremdstoffen ist vorzugsweise vorgesehen, dass die Reinigungsstufe mehrere Abschnitte umfasst, wobei die Abschnitte jeweils über eine Wartungsmöglichkeit verfügen. Aufgrund der Tatsache, dass es sich bei den Fremdstoffen um einen Mix unterschiedlicher Verschmutzungsarten handelt, umfasst die Reinigungsstufe mehrere Abschnitte, die in Kombination das Niederschlagswasser von den Fremdstoffen reinigen. Die Abschnitte können, was ihre Reinigungsleistung und ihr Reinigungsprinzip betrifft, auf die zu erwartenden Fremdstoffe abgestimmt werden. So können unterschiedliche physikalische und chemisch-physikalische Wirkmechanismen zum Einsatz kommen.

Die Reinigungs- und Versickerungsanlage verfügt über mehrere Wartungsöffnungen, die unterschiedliche positioniert sind, sodass zu jeder Stufe ein Zugang für die Wartung der gesamten Stufe oder einzelnen Abschnitte gewährleistet ist. Zusätzlich kann die Wartung einer Stufe über den Zu- bzw. Zulauf der Stufe erfolgen.

Gemäß einer bevorzugten Weiterbildung der Erfindung, umfasst die Reinigungsstufe einen Sedimentationsabschnitt, einen Sorptionsabschnitt und/oder einen Membranfilterabschnitt.

Der Sedimentationsabschnitt ist dazu ausgestaltet, sedimentierbare Feststoffe zurückzuhalten. Die Feststoffe setzten sich im Sedimentationsabschnitt als Sediment auf dem Boden des Abschnittes ab. Über die Wartungsmöglichkeit können bei einer Wartung beispielsweise die Sedimente abgesaugt oder entfernt werden.

Der Sorptionsabschnitt ist dazu ausgestaltet, Leichtflüssigkeiten sowie feinst partikuläre Feststoffe und gelöste Stoffe zurückzuhalten. Darüber hinaus dient der Sorptionsabschnitt dazu, den Sedimentationsabschnitt von dem Membranfilterabschnitt zu trennen, damit zum Membranfilterabschnitt keine gröberen bzw. von der Menge her weniger Fremdstoffe gelangen. Grundsätzlich kann der Sorptionsabschnitt eine Filterschicht, beispielsweise ein Sorptionssubstrat zum Entfernen von Schwermetallen, umfassen. Bevorzugt ist der Sorptionsabschnitt aber mehrschichtig aufgebaut, um unterschiedlichen Anforderungen gerecht zu werden. Dafür ist der Sorptionsabschnitt mehrschichtig aus unterschiedlichen Filterschichten aufgebaut. Der Sorptionsabschnitt umfasst beispielsweise eine Schicht aus Koaleszenzgewebe, eine Schicht aus Sorptionsgewebe und eine Ionenaustauschoberfläche. Insbesondere ist vorgesehen, dass der Sorptionsabschnitt durch die Wartungsmöglichkeit kontrolliert und/oder ausgetauscht werden kann. Alternativ kann vorgesehen sein, dass im Sedimentationsabschnitt ebenfalls ein Sorptionsabschnitt integriert ist. Beispielsweise kann ein Ölabscheider im Sedimentationsabschnitt integriert sein. Im nachgelagerten Sorptionsabschnitt kann dann beispielsweise eine weitere Abscheidung von Leichtflüssigkeiten mittels Koaleszenzgewebe stattfinden. Weiter alternativ kann vorgesehen sein, dass der Sorptionsabschnitt auch der Speicher-/Versickerungsstufe nachgeschaltet ist. Dies soll dann beispielsweise eine weitergehende biologische Behandlung des Niederschlagswassers mittels Biofiltration ermöglichen.

Der Membranfilterabschnitt ist dazu ausgestaltet, weitere Fremdstoffe mittels einer Membran zu entfernen. Dabei soll die Membran so ausgestaltet sein, dass Fremdstoffe, die nicht durch Absetzen und oder Filtrieren entfernt werden können, effektiv aus dem Niederschlagswasserentfernt werden. Insbesondere die Fremdstoffe im Größenbereich von kleiner als 0,63 µm. Somit müssen die Poren der Membran so ausgestaltet sein, dass Fremdstoffe im Größenbereich von kleiner als 0,63 µm abgeschieden werden können. Allerdings dürfen die abgeschiedenen Fremdstoffe nicht zu einer Verblockung, also einer zu starken hydraulischen Beeinflussung der Membran führen. Auch muss eine Reinigung, vorzugsweisedurch Spülung möglich sein.

Damit sich insbesondere beim Füllen der Reinigungsstufe keine sich schon in der Reinigungsstufe befindenden Fremdstoffe lösen, und so in die Speicher-/Versickerungsstufe eingetragen werden, ist es vorgesehen, dass die Reinigungsstufe derart ausgestaltet ist, dass die Fremdstoffe von der Reinigungsstufe zurückgehalten werden. Insbesondere wird darunter ein anhaltendes Zurückhalten der Fremdstoffe verstanden. Die Reinigungsstufe ist also so ausgestaltet, dass es bei einem erneuten Fluideintrag nicht zu einer Remobilisierung der zuvor sedimentierten Feststoffe bzw. zu einem erneuten Lösen der adsorbierten Stoffe kommt. Auch wird eine Remobilisierung während des Trockenfallens verhindert, um ein Weitertransportieren der Fremdstoffe zu unterbinden. Bevorzugt sorgt der dem Membranfilterabschnitt vorgeschaltete Sorptionsabschnitt dafür, dass Fremdstoffe aus dem Sedimentationsbereich beim Trockenfallvorgang nicht in den Membranfilterabschnitt gelangen.

In diesem Zusammenhang ist in einer bevorzugten Weiterbildung der Erfindung vorgesehen, dass im Zulauf und/oder in der Reinigungsstufe strömungshemmende Strukturen vorgesehen sind. Der Zulauf und/oder die Reinigungsstufe sind also mit mechanischen oder baulichen Elementen ausgestattet, die die Strömung des Niederschlagswassersmindern. So wird sichergestellt, dass die Strömung gering genug ist, so dass sich in der Reinigungsstufe befindende Fremdstoffe, insbesondere sich schon abgesetzte Feststoffe nicht remobilisieren. Die strömungshemmenden Strukturen haben beispielsweise Einfluss auf die Anströmgeometrie der Reinigungsstufe, so dass es zu einer definierten Anströmung ohne Turbulenzen kommt. Die strömungshemmenden Strukturen können zum Beispiel Strömungstrenner, Prallwände, Tauch- oder Schlammwände sein. Diese Einbauten dienen der hydraulischen und qualitativen Optimierung des Zulaufs und/oder der Reinigungsstufe. Weiterhin können Hindernisse im Zulauf und/oder in der Reinigungsstufe vorgesehen sein, die die Fließgeschwindigkeit des Niederschlagswassers hemmen. Dies können Rillen, Erhebungen, Vertiefungen oder ähnliche Rauheiten sein.

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch eine Reinigungs- und Versickerungsanlage gemäß einem bevorzugten Ausführungsbeispiel der Erfindung,
- Fig. 2a: schematisch eine Reinigungs- und Versickerungsanlage gemäß einem weiteren bevorzugten Ausführungsbeispiel der Erfindung,
- Fig. 2b: schematisch eine Reinigungs- und Versickerungsanlage ähnlich zu Fig. 2a mit einem zusätzlichen Ablaufelement in das umgebende Erdreich,
- Fig. 2c: schematisch eine Reinigungs- und Versickerungsanlage ähnlich zu Fig. 2a mit einem Ablaufelement zwischen aufeinanderfolgenden Stufen,
- Fig. 3a: schematisch eine Reinigungs- und Versickerungsanlage ähnlich zu Fig. 1 bei überstauter Reinigungsstufe und
- Fig. 3b: schematisch eine Reinigungs- und Versickerungsanlage ähnlich zu Fig. 1 bei nicht überstauter Reinigungsstufe.

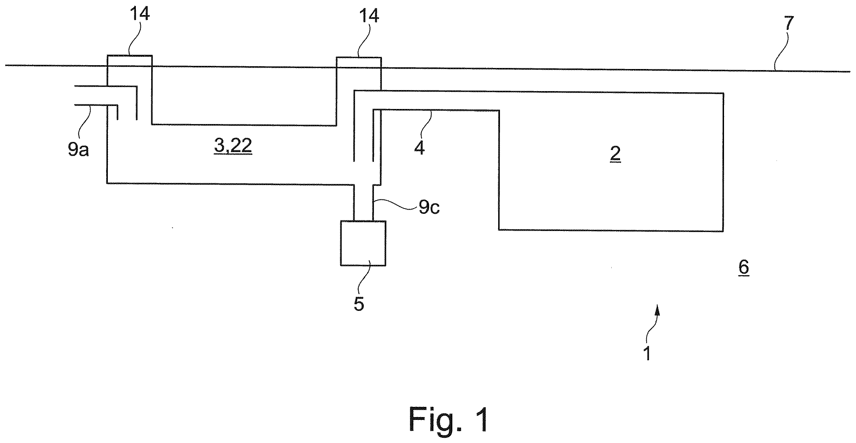

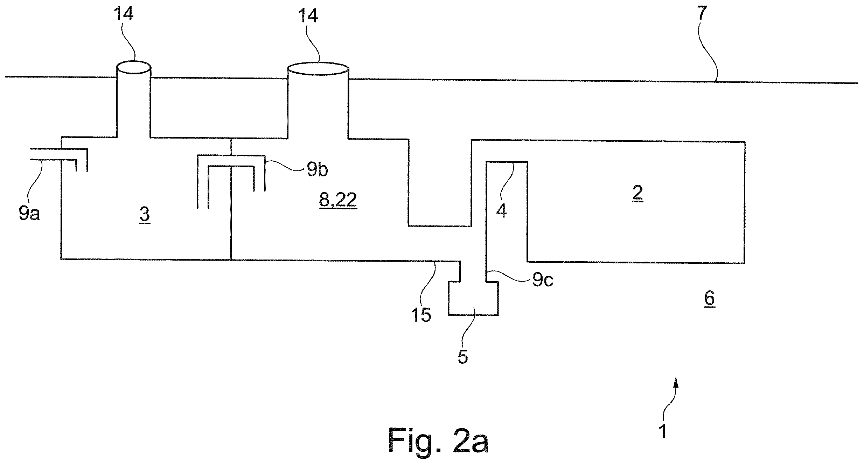

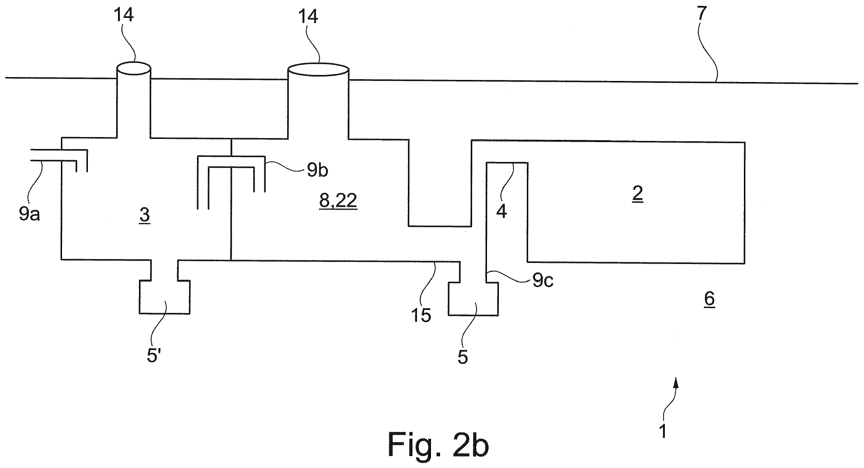

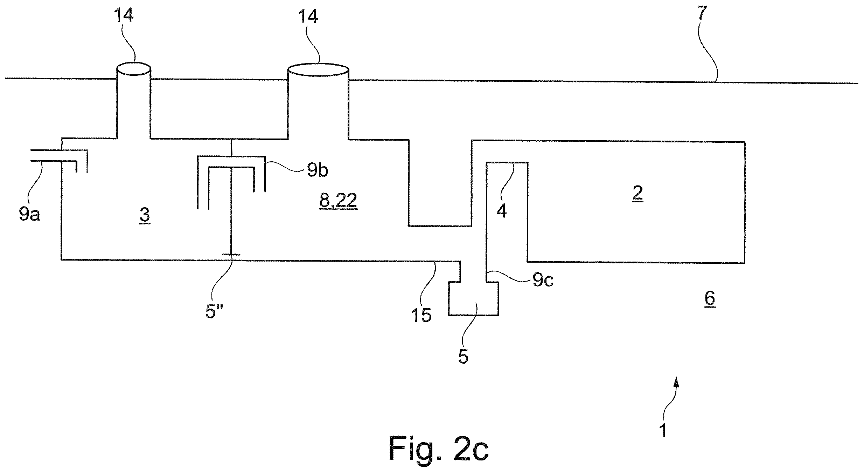

Im überbauten Raum, beispielsweise bei Straßen oder Parkplätzen, werden Speicher-/Versickerungssysteme in der Regel unterirdisch angelegt. Fig. 1 zeigt schematisch eine Reinigungs- und Versickerungsanlage 1, die unter einer Straße 7 angelegt ist. Fig. 1, wie auch die Fig. 2a, 2b und 2c, zeigen nur den Aufbau der jeweiligen Reinigungs- und Versickerungsanlage 1 ohne Niederschlagswasser.

Die der Speicher-/Versickerungsstufe 2 vorgeschaltete Stufe 22 ist in Fig. 1 eine Reinigungsstufe 3. Das Niederschlagswasser kann über einen Zulauf 9a der Reinigungsstufe 3 zugeführt werden. Der Zulauf 9a weist ein hydrostatisches Gefälle auf, sodass das Niederschlagswasser ohne Krafteinwirkung der Reinigungsstufe 3 zugeführt werden kann. Die Reinigungsstufe 3 weist Wartungsöffnungen 14 auf, die überirdische Wartungsarbeiten an der unterirdischen Reinigungs- und Versickerungsanlage 1 ermöglichen.

Steigt der Spiegel des Niederschlagswassers, beispielsweise bei anhaltendem Regenereignis an, überstaut die Reinigungsstufe 3, sodass das Niederschlagswasser über einen Zulauf 4 der Speicher-/Versickerungsstufe 2 zugeführt werden kann. Dadurch, dass die Reinigungsstufe 3 überstaut sein muss, damit das Niederschlagswasser in die Speicher-/Versickerungsstufe 2 abfließen kann, dient die Reinigungsstufe 3 als Zwischenspeicher für das Niederschlagswasser. In der Speicher-/Versickerungsstufe wird das in der Reinigungsstufe 3 gereinigte Niederschlagswasser nicht nur gespeichert, sondern versickert auch in das die Reinigungs- und Versickerungsanlage umgebende Erdreich. Das Trockenfallen der Reinigungsstufe bei nachlassendem Regenereignis wird durch das Ablaufelement 5 ermöglicht. Es weist ebenfalls ein hydrostatisches Gefälle auf, damit das restliche Niederschlagswasser, das nicht über den Zulauf der Speicher-/Versickerungsanlage zugeführt werden konnte, ohne Krafteinwirkung dem Ablaufelement 5 zugeführt werden kann. Über das Ablaufelement 5 kann das restliche Niederschlagswasser in das Erdreich 6 versickern, sodass die Reinigungsstufe 3 trockenfallen kann.

Wie bereits erwähnt, kann die der Speicher-/Versickerungsstufe 2 vorgeschaltete Stufe 22 jedoch auch eine Behandlungsstufe 8 sein, der eine Reinigungsstufe 3 vorgeschaltet ist. Dieser Aufbau ist in Fig. 2 schematisch dargestellt. Die Reinigungsstufe 3 und die Behandlungsstufe 8 sind über einen Zulauf 9b miteinander verbunden. Auch dieser Zulauf 9b weist ein hydrostatisches Gefälle auf, damit sowohl die Reinigungsstufe 3 als auch die Behandlungsstufe 8 als Zwischenspeicher für das Niederschlagswasser dienen. Sowohl die Reinigungsstufe 3 als auch die Behandlungsstufe 8 weisen je eine Wartungsöffnung 14 für Wartungsarbeiten auf. Das Ablaufelement 5 ist in diesem Ausführungsbeispiel über eine wegleitende Rohrleitung 15 sowie über einen Zulauf 9c zum Ablaufelement 5 mit der Behandlungsstufe 8 verbunden. Über einen Zulauf 4 kann das Niederschlagswasser der Speicher-/Versickerungsstufe 2 zugeführt werden. In der Speicher-/Versickerungsanlage versickert das Niederschlagswasser in das Erdreich 6.

Fig. 2b zeigt einen ähnlichen Aufbau wie Fig. 2a, wobei die Reinigungsstufe 3 mit einem eigenen Ablaufelement 5` versehen ist, das einen Ablauf des Niederschlagswassers aus der Reinigungsstufe 3 nicht nur über den Zulauf 9b in die Behandlungsstufe 8 ermöglicht, sondern - natürlich in deutlich geringerem Maße - auch einen Ablauf in das umgebende Erdreich erlaubt, damit die Reinigungsstufe trockenfallen kann. Alternativ dazu zeigt Fig. 2c einen Aufbau, bei dem anstatt eines solchen Ablaufs 5` ins Erdreich ein Ablauf 5" vorgesehen ist, der eine zusätzliche Verbindung der Reinigungsstufe 3 mit der Behandlungsstufe 8 herstellt. Auch auf diese Weise kann die Reinigungsstufe 3 trockenfallen, da nun ein Abfluss des Niederschlagswassers aus der Reinigungsstufe 3 in die Behandlungsstufe 8 bei nicht hinreichend hoher Überstauung der Reinigungsstufe jedenfalls noch über diesen Ablauf 5" erfolgen kann.

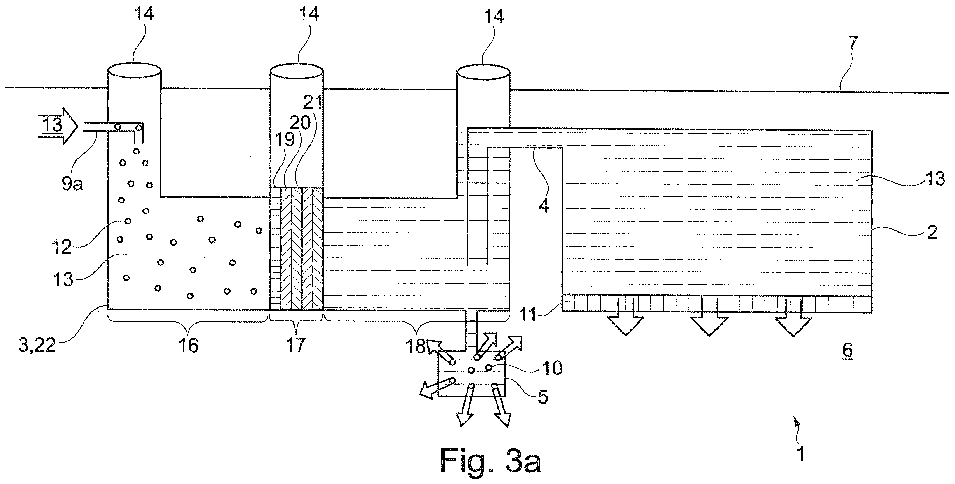

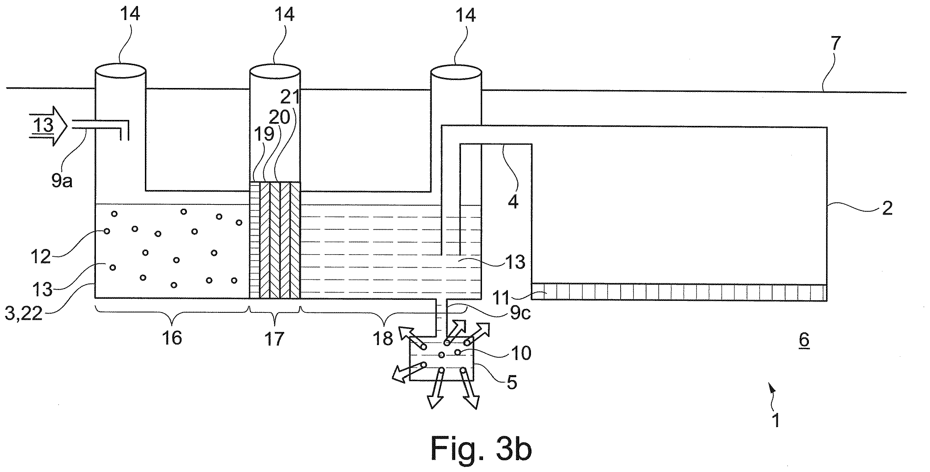

Ausschlaggebend für die Funktionsweise der Reinigungs- und Versickerungsanlage 1 mit Ablaufelement 5 ist der jeweilige Füllstand bzw. Spiegel des Niederschlagswassers 13. Fig. 3a zeigt schematisch eine Reinigungs- und Versickerungsanlage 1 ähnlich zu Fig. 1 bei überstauter Reinigungsstufe 3, während Fig. 3b eine Reinigungs- und Versickerungsanlage 1 ähnlich zu Fig. 1 bei nicht überstauter Reinigungsstufe 3 schematisch zeigt.

Wie aus Fig. 3a ersichtlich, wird das Niederschlagswasser 13 über einen Zulauf 9a der Reinigungsstufe 3 zugeführt. Das Niederschlagswasser enthält in der Regel Fremdstoffe 12 in Form von Feststoffen, Leichtflüssigkeiten und gelösten Stoffe. Diese Fremdstoffe 12 stellen eine Verschmutzung dar, die in der Reinigungsstufe beseitigt werden soll. Zur Reinigung des Niederschlagswasser 13 ist die Reinigungsstufe in einen Sedimentationsabschnitt 16, einen Sorptionsabschnitt 17 und einen Membranfilterabschnitt 18 aufgeteilt. Der Sorptionsabschnitt 17 umfasst Koaleszenzgewebe 19, Sorptionsgewebe 20 sowie Ionenaustauschflächen 21. Der Membranfilterabschnitt 18 umfasst Membranfilter (nicht abgebildet). Bei überstauter Reinigungsstufe 3 kann das gereinigte Niederschlagswasser 13 über einen Zulauf 4 der Speicher-/Versickerungsstufe 2 zugeführt werden. Der Behälter der Speicher-/Versickerungsstufe 2 ist mit einem wasserdurchlässigem Textil 11 ummantelt, sodass das Niederschlagswasser 13 durch das wasserdurchlässige Textil 11 in das Erdreich 6 versickern kann. Wie in Fig. 3a erkennbar, versickert gleichzeitig ein geringer Anteil des Niederschlagswassers 13 über das Ablaufelement 5. Das Ablaufelement 5 weist Bohrungen 10 auf, durch die das Niederschlagswasser 13 an das Erdreich 6 abgegeben werden kann. Der Durchmesser der Bohrungen 10 definiert die Geschwindigkeit mit der das Niederschlagswasser 13 an das Erdreich 6 abgegeben werden kann. Da der Durchmesser verhältnismäßig klein gewählt ist, ist der Anteil des Niederschlagswassers 13, der durch diese Leckage in das Erdreich 6 abgegeben wird relativ zu dem Anteil, der über die Speicher-/Versickerungsstufe 2 an das Erdreich 6 abgegeben wird verhältnismäßig klein.

Wird kein nachkommendes Niederschlagswasser 13 mehr über den Zulauf 9a der Reinigungsstufe 3 zugeführt sinkt der Spiegel des Niederschlagswassers 13 in der Reinigungsstufe, sodass sie nicht mehr überstaut ist. Dieser Zustand ist in Fig. 3b dargestellt. Das verbleibende Niederschlagswasser 13 kann nicht mehr über die Speicher-/Versickerungsstufe an das Erdreich abgegeben werden. Um ein Trockenfallen der Reinigungsstufe 3 dennoch zu ermöglichen, ist das Ablaufelement über einen Zulauf 9c an die Reinigungsstufe 3 gekoppelt. Das Ablaufelement 5 weist Bohrungen 10 auf, über die das Niederschlagswasser 13 an das Erdreich 6 abgegeben werden kann. Das verbleibende Niederschlagswasser 13 versickert demnach nicht über die Speicher-/Versickerungsstufe 2, sondern über das Ablaufelement 5 in das Erdreich 6. Die Reinigungsstufe 3 kann demnach praktisch vollständig trockenfallen.

### Bezugszeichenliste

- 1: Reinigungs- und Versickerungsanlage
- 2: Speicher-/Versickerungsstufe
- 3: Reinigungsstufe
- 4: Ablauf
- 5: Ablaufelement
- 6: Erdreich
- 7: Straße
- 8: Behandlungsstufe
- 9: Zulauf
- 9a: Zulauf zur Reinigungsstufe
- 9b: Zulauf zur Behandlungsstufe
- 9c: Zulauf zum Ablaufelement
- 10: Bohrungen
- 11: wasserdurchlässiges Textil
- 12: Fremdstoff, Feststoff, Leichtflüssigkeiten, gelöste Stoffe
- 13: Niederschlagswasser
- 14: Wartungsöffnung
- 15: wegleitende Rohrleitung
- 16: Sedimentationsabschnitt
- 17: Sorptionsabschnitt
- 18: Membranfilterabschnitt
- 19: Koaleszenzgewebe
- 20: Sorptionsgewebe
- 21: Ionenaustauschoberfläche
- 22: der Speicher-/Versickerungsstufe vorgeschaltete Stufe

## Patentansprüche

1. Reinigungs- und Versickerungsanlage (1) für Niederschlagswasser (13), umfassend
eine Speicher-/Versickerungsstufe (2) und eine der Speicher-/Versickerungsstufe (2) vorgeschaltete Stufe (22), wobei
die Speicher-/Versickerungsstufe (2) dazu ausgestaltet ist, das Niederschlagswasser (13) zur Zwischenspeicherung in sich aufzunehmen und zur Versickerung abzugeben,
die der Speicher-/Versickerungsstufe (2) vorgeschaltete Stufe (22) derart mit der Speicher-/Versickerungsstufe (2) gekoppelt ist, dass ein Abfluss des Niederschlagswassers (13) von der der Speicher-/Versickerungsstufe (2) vorgeschalteten Stufe (22) in die Speicher-/Versickerungsstufe (2) nur bei überstauter der Speicher-/Versickerungsstufe (2) vorgeschalteten Stufe (22) möglich ist,
die der Speicher-/Versickerungsstufe (2) vorgeschaltete Stufe (22) eine Reinigungsstufe (3) ist oder die der Speicher-/Versickerungsstufe (2) vorgeschaltete Stufe (22) eine Behandlungsstufe (8) ist, der eine Reinigungsstufe (3) vorgeschaltet ist, und
die der Speicher-/Versickerungsstufe (2) vorgeschaltete Stufe (22) ein Ablaufelement (5) aufweist, das auch dann noch ein wenigstens teilweises Ablaufen von in der der Speicher-/Versickerungsstufe (2) vorgeschalteten Stufe (22) vorhandenen Niederschlagswassers (13) ermöglicht, wenn kein Abfluss des Niederschlagswassers (13) von der der Speicher-/Versickerungsstufe (2) vorgeschalteten Stufe (22) in die Speicher-/Versickerungsstufe (2) mehr erfolgt,
**dadurch gekennzeichnet, dass**
das Ablaufelement (5) derart ausgestaltet ist, dass bei überstauter der Speicher-/Versickerungsstufe (2) vorgeschalteten Stufe (22) ein Hauptanteil des Niederschlagswassers (13) von wenigstens 95 % über die Speicher-/Versickerungsstufe (2) versickern kann, während gleichzeitig ein geringerer Teil als Leckage durch das Ablaufelement (5) versickern kann.

2. Reinigungs- und Versickerungsanlage (1) nach Anspruch 1 **dadurch gekennzeichnet, dass** das Ablaufelement (5) ein Trockenfallen der der Speicher-/Versickerungsstufe (2) vorgeschalteten Stufe (22) ermöglicht.

3. Reinigungs- und Versickerungsanlage (1) nach Anspruch 1 **dadurch gekennzeichnet, dass** die Speicher-/Versickerungsstufe (2) und das Ablaufelement (5) im eingebauten Zustand dazu ausgestaltet sind, das Niederschlagswasser (13 )zur Versickerung in ein die Speicher-/Versickerungsstufe (2) bzw. das Ablaufelement (5) umgebendes Erdreich (6), in ein Kanalnetz oder in eine Vorflut abzugeben.

4. Reinigungs- und Versickerungsanlage (1) nach einem der Ansprüche 1 bis 3, **dadurch gekennzeichnet, dass** die Reinigungsstufe (3) einen Zulauf (9a) aufweist, über den das Niederschlagswasser (13) der Reinigungsstufe (3) zuführbar wird, wobei der Zulauf (9a) ein hydrostatisches Gefälle aufweist.

5. Reinigungs- und Versickerungsanlage (1) nach einem der Ansprüche 1 bis 4, **dadurch gekennzeichnet, dass** die Reinigungsstufe (3) und/oder die Behandlungsstufe (8) dazu ausgestaltet sind, das Niederschlagswasser (13) zur Zwischenspeicherung in sich aufzunehmen.

6. Reinigungs- und Versickerungsanlage (1) nach einem der Ansprüche 1 bis 5, **dadurch gekennzeichnet, dass** die Reinigungsstufe (3) dazu ausgestaltete ist, das Niederschlagswasser (13) von Feststoffen, Leichtflüssigkeiten und/oder gelösten Stoffen (12) zu reinigen.

7. Reinigungs- und Versickerungsanlage (1) nach einem der Ansprüche 1 bis 6, **dadurch gekennzeichnet, dass** die Reinigungsstufe (3) einen Sedimentationsabschnitt (16), einen Sorptionsabschnitt (17) und/oder einen Membranfilterabschnitt (18) umfasst.

8. Reinigungs- und Versickerungsanlage (1) nach einem der vorherigen Ansprüche, **dadurch gekennzeichnet, dass** das Niederschlagswasser (13) über einen Zulauf (4) der Speicher-/Versickerungsstufe (2) zuführbar ist, wobei der Zulauf (4) derart positioniert ist, dass das Niederschlagswasser (13) den Zulauf (4) lediglich bei einem vorbestimmtem Füllstand der der Speicher-/Versickerungsstufe (2) vorgeschalteten Stufe (22) erreichen kann.

9. Reinigungs- und Versickerungsanlage (1) nach einem der vorherigen Ansprüche, **dadurch gekennzeichnet, dass** das Ablaufelement (5) derart positioniert ist, dass ein Zulauf (9c) zum Ablaufelement (5) ein hydrostatisches Gefälle aufweist.

10. Reinigungs- und Versickerungsanlage (1) nach einem der vorherigen Ansprüche, **dadurch gekennzeichnet, dass** das Ablaufelement (5) Bohrungen (10) aufweist und/oder mit einem wasserdurchlässigen Textil ummantelt ist.

11. Reinigungs- und Versickerungsanlage (1) nach einem der vorherigen Ansprüche, **dadurch gekennzeichnet, dass** das Ablaufelement (5) direkt oder über eine von der Speicher-/Versickerungsstufe (2) vorgeschalteten Stufe (22) wegleitende Rohrleitung (15) an die der Speicher-/Versickerungsstufe (2) vorgeschalteten Stufe (22) angeschlossen ist.

12. Reinigungs- und Versickerungsanlage (1) nach einem der vorherigen Ansprüche, **dadurch gekennzeichnet, dass** das Ablaufelement (5) derart ansteuerbar ist, dass ihre Ablauffunktion ein- bzw. ausschaltbar oder regulierbar ist.

## Claims

1. A purifying and infiltration system (1) for rainwater (13), comprising
a storage/infiltration stage (2) and a stage (22) upstream of the storage/infiltration stage (2), wherein
the storage/infiltration stage (2) is designed to receive within itself the rainwater (13) for temporary storage and to dispense it for infiltration,
the stage (22) arranged upstream of the storage/infiltration stage (2) is coupled to the storage/infiltration stage (2) in such a way that an outflow of the rainwater (13) from the stage arranged upstream of the storage/infiltration stage (2) into the storage/infiltration stage (2) is possible only when the stage (22) arranged upstream of the storage/infiltration stage (2) is backed up,
the stage (22) arranged upstream of the storage/infiltration stage (2) is a purifying stage (3) or the stage (22) arranged upstream of the storage/infiltration stage (2) is a treatment stage (8) which is arranged downstream of a purifying stage (3), and
the stage (22) arranged upstream of the storage/infiltration stage (2) has a drain element (5), which then also still allows an at least partial draining of rainwater (13) present in the stage (22) arranged upstream of the storage/infiltration stage (2) when the rainwater (13) no longer flows out from the stage (22) arranged upstream of the storage/infiltration stage (2) into the storage/infiltration stage (2),
**characterised in that**
the drain element (5) is embodied in such a way that, when the stage (22) arranged upstream of the storage/infiltration stage (2) is overflowing, a main component of the rainwater (13) of at least 95% can infiltrate via the storage/infiltration stage (2), whereas at the same time a smaller part can infiltrate as leakage through the drain element (5).

2. The purifying and infiltration system (1) according to claim 1, **characterised in that** the drain element (5) allows the stage (22) arranged upstream of the storage/infiltration stage (2) to run dry.

3. The purifying and infiltration system (1) according to claim 1, **characterised in that** the storage/infiltration stage (2) and the drain element (5) in the installed state are configured to dispense the rainwater (13) for infiltration in an earth region surrounding (6) the storage/infiltration stage (2) or the drain element (5) into a sewer network or into a runoff capability.

4. The purifying and infiltration system (1) according to any one of claims 1 to 3, **characterised in that** the purifying stage (3) has an inflow (9a), via which the rainwater (13) can be fed to the purifying stage (3), wherein the inflow (9a) has a hydrostatic gradient.

5. The purifying and infiltration system (1) according to any one of claims 1 to 4, **characterised in that** the purifying stage (3) and/or the treatment stage (8) are designed to receive within themselves the rainwater (13) for temporary storage.

6. The purifying and infiltration system (1) according to any one of claims 1 to 5, **characterised in that** the purifying stage (3) is designed to purify the rainwater (13) of solids, light liquids and/or dissolved substances (12).

7. The purifying and infiltration system (1) according to any one of claims 1 to 6, **characterised in that** the purifying stage (3) comprises a sedimentation portion (16), a sorption portion (17) and/or a membrane filter portion (18).

8. The purifying and infiltration system (1) according to any one of the preceding claims, **characterised in that** the rainwater (13) can be fed via an inflow (4) of the storage/infiltration stage (2), wherein the inflow (4) is positioned in such a way that the rainwater (13) can reach the inflow (4) merely at a predetermined fill level of the stage (22) arranged upstream of the storage/infiltration stage (2).

9. The purifying and infiltration system (1) according to any one of the preceding claims, **characterised in that** the drain element (5) is positioned in such a way that an inflow (9c) to the drain element (5) has a hydrostatic gradient.

10. The purifying and infiltration system (1) according to any one of the preceding claims, **characterised in that** the drain element (5) has bores (10) and/or is sheathed with a water-permeable textile.

11. The purifying and infiltration system (1) according to any one of the preceding claims, **characterised in that** the drain element (5) is connected to the stage (22) arranged upstream of the storage/infiltration stage (2) directly or via a pipeline (15) conducting away from the stage (22) arranged upstream of the storage/infiltration stage (2).

12. The purifying and infiltration system (1) according to any one of the preceding claims, **characterised in that** the drain element (5) can be controlled in such a way that its drain function can be switched on or off or can be regulated.

## Revendications

1. Système de purification et d'infiltration (1) pour l'eau pluviale (13), comprenant
un étage de stockage/infiltration (2) et un étage (22) en amont de l'étage de stockage/infiltration (2), dans lequel
l'étage de stockage/infiltration (2) est conçu pour recevoir en son sein l'eau pluviale (13) pour stockage temporaire et pour la distribuer pour infiltration,
l'étage (22) agencé en amont de l'étage de stockage/infiltration (2) est couplé à l'étage de stockage/infiltration (2) de telle sorte qu'un débit sortant de l'eau pluviale (13) depuis l'étage agencé en amont de l'étage de stockage/infiltration (2) dans l'étage de stockage/infiltration (2) est possible uniquement lorsque l'étage (22) agencé en amont de l'étage de stockage/infiltration (2) est obstrué,
l'étage (22) agencé en amont de l'étage de stockage/infiltration (2) est un étage de purification (3) ou l'étage (22) agencé en amont de l'étage de stockage/infiltration (2) est un étage de traitement (8) qui est agencé en aval d'un étage de purification (3), et
l'étage (22) agencé en amont de l'étage de stockage/infiltration (2) a un élément d'évacuation (5), qui permet également alors toujours une évacuation au moins partielle de l'eau pluviale (13) présente dans l'étage (22) agencé en amont de l'étage de stockage/infiltration (2) lorsque l'eau pluviale (13) ne s'écoule plus depuis l'étage (22) agencé en amont de l'étage de stockage/infiltration (2) dans l'étage de stockage/infiltration (2),
**caractérisé en ce que**
l'élément d'évacuation (5) est réalisé d'une façon telle que, lorsque l'étage (22) agencé en amont de l'étage de stockage/infiltration (2) déborde, un constituant principal de l'eau pluviale (13) d'au moins 95 % peut s'infiltrer par le biais de l'étage de stockage/infiltration (2), alors qu'au même moment une plus petite partie peut s'infiltrer sous forme de fuites à travers l'élément d'évacuation (5).

2. Système de purification et d'infiltration (1) selon la revendication 1, **caractérisé en ce que** l'élément d'évacuation (5) permet à l'étage (22) agencé en amont de l'étage de stockage/infiltration (2) de s'assécher.

3. Système de purification et d'infiltration (1) selon la revendication 1, **caractérisé en ce que** l'étage de stockage/infiltration (2) et l'élément d'évacuation (5) dans l'état installé sont conçus pour distribuer l'eau pluviale (13) pour infiltration dans une région de terre entourant (6) l'étage de stockage/infiltration (2) ou l'élément d'évacuation (5) dans un réseau d'égouts ou dans une installation de ruissellement.

4. Système de purification et d'infiltration (1) selon l'une quelconque des revendications 1 à 3, **caractérisé en ce que** l'étage de purification (3) a un débit entrant (9a), par le biais duquel l'eau pluviale (13) peut être introduite dans l'étage de purification (3), dans lequel le débit entrant (9a) a un gradient hydrostatique.

5. Système de purification et d'infiltration (1) selon l'une quelconque des revendications 1 à 4, **caractérisé en ce que** l'étage de purification (3) et/ou l'étage de traitement (8) sont conçus pour recevoir en leur sein l'eau pluviale (13) pour stockage temporaire.

6. Système de purification et d'infiltration (1) selon l'une quelconque des revendications 1 à 5, **caractérisé en ce que** l'étage de purification (3) est conçu pour purifier l'eau pluviale (13) des solides, des liquides légers et/ou des substances dissoutes (12).

7. Système de purification et d'infiltration (1) selon l'une quelconque des revendications 1 à 6, **caractérisé en ce que** l'étage de purification (3) comprend une partie de sédimentation (16), une partie de sorption (17) et/ou une partie de filtre à membrane (18).

8. Système de purification et d'infiltration (1) selon l'une quelconque des revendications précédentes, **caractérisé en ce que** l'eau pluviale (13) peut être introduite par le biais d'un débit entrant (4) de l'étage de stockage/infiltration (2), dans lequel le débit entrant (4) est placé d'une façon telle que l'eau pluviale (13) peut atteindre le débit entrant (4) uniquement à un niveau de remplissage prédéterminé de l'étage (22) agencé en amont de l'étage de stockage/infiltration (2).

9. Système de purification et d'infiltration (1) selon l'une quelconque des revendications précédentes, **caractérisé en ce que** l'élément d'évacuation (5) est positionné d'une façon telle qu'un débit entrant (9c) de l'élément d'évacuation (5) a un gradient hydrostatique.

10. Système de purification et d'infiltration (1) selon l'une quelconque des revendications précédentes, **caractérisé en ce que** l'élément d'évacuation (5) a des orifices (10) et/ou est gainé d'un textile perméable à l'eau.

11. Système de purification et d'infiltration (1) selon l'une quelconque des revendications précédentes, **caractérisé en ce que** l'élément d'évacuation (5) est relié à l'étage (22) agencé en amont de l'étage de stockage/infiltration (2) directement ou par le biais d'un pipeline (15) éloignant de l'étage (22) agencé en amont de l'étage de stockage/infiltration (2).

12. Système de purification et d'infiltration (1) selon l'une quelconque des revendications précédentes, **caractérisé en ce que** l'élément d'évacuation (5) peut être commandé d'une façon telle que sa fonction d'évacuation peut être allumée ou éteinte ou peut être régulée.
